**Europäisches Patentamt**

**European Patent Office**

**Office européen des brevets**

(19)

(11) Veröffentlichungsnummer : **0 402 770 B1**

(12) ## EUROPÄISCHE PATENTSCHRIFT

(45) Veröffentlichungstag der Patentschrift :
**06.10.93 Patentblatt 93/40**

(21) Anmeldenummer : **90110793.8**

(22) Anmeldetag : **07.06.90**

(51) Int. Cl.⁵ : **A01N 25/22,** A01N 25/30,
A01N 47/30, A01N 39/00,
A01N 39/02, A01N 39/04,
A01N 57/20, A01N 43/88,
A01N 43/40

(54) **Flüssige herbizide Mischformulierungen.**

(30) Priorität : **10.06.89 DE 3919037**

(43) Veröffentlichungstag der Anmeldung :
**19.12.90 Patentblatt 90/51**

(45) Bekanntmachung des Hinweises auf die
Patenterteilung :
**06.10.93 Patentblatt 93/40**

(84) Benannte Vertragsstaaten :
**AT BE CH DE DK ES FR GB GR IT LI NL SE**

(56) Entgegenhaltungen :
**EP-A- 0 297 305**
**EP-B- 0 009 620**
**DD-B- 206 620**
**DE-A- 3 222 622**

(73) Patentinhaber : **HOECHST**
**AKTIENGESELLSCHAFT**
**D-65926 Frankfurt (DE)**

(72) Erfinder : **Frisch, Gerhard, Dr.**
**Westerwaldstrasse 7**
**D-6390 Wehrheim (DE)**

## Beschreibung

Die Erfindung betrifft flüssige herbizide Mischformulierungen mit Monolinuron. Flüssige herbizide Mischformulierungen sind solche, bei denen mindestens 2 Wirkstoffe in der anwendungsfertigen Formulierung vorliegen. Mischformulierungen sind häufig vorteilhaft gegenüber Einzelformulierungen, weil beispielsweise durch Wirkstoffkombinationen eine Wirkungsverbesserung erreicht oder das phytotoxische Verhalten der Herbizide deutlich verbessert werden kann. Weiterhin können die anwendungstechnischen Eigenschaften verbessert und Verpackungen minimiert werden. Bekannt sind solche Mischformulierungen schon beispielsweise von Isoproturon und CMPP Salzlösungen (EP-A 0 130 370) oder von Glufosinate, Simazin und Diuron (EP-A 297 305). In diesen Beispielen liegen die Wirkstoffe Isoproturon bzw. Diuron + Simazin in feinverteilter, fester Form, CMPP bzw. Glufosinate in Salzform in wäßriger Lösung vor. Diese in fester Form dispergierten Wirkstoffe haben Wasserlöslichkeiten von höchstens 55 mg/l Wasser bei 20°C, so daß die Gefahr des Kristallwachstums bei üblichen Lagertemperaturen von -10° bis +50°C vergleichsweise minimal ist. Kristallwachstum in den Formulierungen ist zu vermeiden, weil dies meist zur Instabilität der Dispersion führt. Außerdem ändert sich mit der Kristallgröße die biologische Verfügbarkeit der Wirkstoffe und damit die herbizide Wirkung bei der Anwendung der Formulierung. Bekannt ist weiterhin, daß man Wirkstoffen, die aufgrund ihrer höheren Löslichkeiten zum Beispiel in Wasser oder Ölen zu Kristallwachstum neigen, Farbstoffe zusetzt (EP-17879 (US-4441919), DE-A-2301922 (US-3987187)), die die Kristallisation hemmen können.

Es wurde nun gefunden, daß überraschenderweise bei Mischformulierungen von speziellen salzartigen Wirkstoffen mit dem fest dispergierten Herbizid 3-(4-Chlorphenyl)-1-methoxy-1-methylharnstoff (Monolinuron), das eine Wasserlöslichkeit von etwa 735 mg pro Liter Wasser bei 25°C hat, Kristallwachstum verhindert bzw. weitgehend unterdrückt werden kann, wenn man sich einer speziellen Tensidkombination bedient.

Gegenstand der Erfindung sind flüssige herbizide Zubereitungen (Mischformulierungen) mit einem Gehalt von

a) 1-50 Gew.-%, vorzugsweise 10-40 Gew.-%, Monolinuron,

b) 1-60 Gew.-%, vorzugsweise 8-40 Gew.-%, mindestens eines salzartig gelösten Wirkstoffs aus der Gruppe enthaltend Salze von Phenoxyessig- und Phenoxypropionsäuren, Glufosinate, Glyphosate, Dimethylphosphinoylhydroxyessigsäure, 3-Isopropyl-(1H)benzo-2,1,3-benzo-thiazin-4-on-2,2-dioxid und 1,1'-Dimethyl-4,4'-bipyridiniumchlorid,

c) 0,1-20 Gew.-%, vorzugsweise 1-6 Gew.-%, eines Ligninsulfonats,

d) 0,1-18 Gew.-%, vorzugsweise 0,2-5 Gew.-%, eines gegebenenfalls sulfatierten Alkylpolyethoxyethers mit 12 bis 26 C-Atomen im Alkylrest und einem Ethoxylierungsgrad von 10 bis 50 EO (Ethylenoxy-Einheiten),

e) 0-25 Gew.-%, vorzugsweise 0 bis 15 Gew.-%, üblicher Hilfsmittel aus der Gruppe enthaltend Netzmittel, Entschäumer, Verdicker, Konservierungsmittel, Frostschutzmittel und das Eintrocknen verhindernde Zusätze und

f) 20-80 Gew.-%, vorzugsweise 30-65 Gew.-%, Wasser.

Monolinuron (Bestandteil a) ist in der Mischformulierung hauptsächlich als fester dispergierter Wirkstoff und nur zu einem geringen Teil in gelöster Form enthalten.

Die salzartig gelösten Wirkstoffe sind bevorzugt herbizid wirksame Phenoxyessig- bzw. Phenoxypropionsäurederivate in Form der Alkali-, Erdalkali- und gegebenenfalls substituierten Ammoniumsalze, insbesondere der Natrium-, Kalium- oder Ammoniumsalze, wobei letztere durch 1 bis 3 Substituenten aus der Gruppe $C_1$-$C_4$-Alkyl, Hydroxyethyl, Hydroxypropyl, Polyethoxyethyl und Amino-($C_1$-$C_4$)-Alkyl substituiert sein können; diese Derivate umfassen insbesondere auch entsprechende Phenoxyphenoxy-, Pyridyloxyphenoxy- und Heteroaryloxyphenoxyessigsäure bzw. -propionsäurederivate. Ebenso geeignet sind Glyphosate und Dimethylphosphinoylhydroxyessigsäure in den möglichen, insbesondere analog genannten Salzformen, weiterhin 3-Isopropyl-(1H)-benzo-2,1,3-benzothiadiazin-4-on-2,2-dioxid und 1,1-Dimethyl-4,4'-bipyridiniumchlorid und insbesondere Glufosinate in den analog genannten möglichen Salzformen. Dabei können optisch aktive Verbindungen sowohl als racemisches Gemisch, als Gemisch mit überwiegendem Anteil eines Enantiomeren oder in enantiomerenreiner Form eingesetzt werden.

Die spezifisch genannten Herbizid-Wirkstoffe und einige ihrer Salze sind bekannt und zum großen Teil in Ch.R. Worthing's "The Pesticide Manual", A World Compendium 8th Edition (1987) by the British Crop Protection Council beschrieben, z. B.: Monolinuron auf Seite 583, Substanz-Nr. 8670; Glufosinate, d.h. 2-Amino-4-(hydroxy(methyl)phosphinoyl)butansäure auf Seite 448, Subst.-Nr. 6930; Glyphosate, d.h. N-(Phosphonomethyl)-glycin, auf Seite 449, Subst.-Nr. 6950; 3-Isopropyl-(1H)benzo-2,1,3-benzothiazin-4-on-2,2-dioxid auf Seite 63, Subst.-Nr. 770; 1,1'-Dimethyl-4,4'-bipyridiniumchlorid auf Seiten 630, 631, Subst.-Nr. 9320. Weiterhin sind in diesem Hand-

2

buch eine Reihe von erfindungsgemäß einsetzbaren Phenoxyessig- und Phenoxypropionsäure-Herbiziden beschrieben. Dimethylphosphinoylhydroxyessigsäure und einige ihrer Salze sind in EP-A 0 106 114 (US-A 4 594 098) beschrieben.

Die erfindungsgemäß enthaltene Tensidkombination setzt sich vornehmlich aus zwei Komponenten zusammen, die essentiell sind, um das Kristallwachstum des Wirkstoffs a) in einer Fertigmischung eines salzartig gelösten Wirkstoffs zu verhindern. Neben diesen beiden Tensidkomponenten können in dieser Fertigmischung noch übliche Hilfsmittel, z.B. Netzmittel wie Natriumsalze von Alkylethersulfaten mit 1 - 3 EO (z.B. (R)Genapol LRO, Hoechst), Entschäumer auf Siliconbasis (beispielsweise die (R)Silcolapse Reihe von ICI) vorhanden sein. Ebenso können ergänzend anorganische und/oder organische Verdicker, beispielsweise auf Aluminumsilikat-, Xanthan-, Methylcellulose-, Polysaccharid-, Erdalkalisilikat-, Gelantine- und Polyvinylalkohol-Basis, Verwendung finden. Falls erforderlich können Konservierungsmittel, beispielsweise auf Formaldehyd-, Benzoesäure- und Triphenylzinn-Basis, oder auch Frostschutzmittel und das Eintrocknen verhindernde Zusätze wie Harnstoff und Polyole, wie Glykol, Propylenglykol, Glycerin und Zucker, zugesetzt werden.

Als Tensidkombinationen, die das Kristallwachstum bei Monolinuron wirksam unterdrücken bzw. verhindern, kommen bevorzugt solche in Frage, die als Bestandteil (c) Ligninsulfonate in ihren möglichen Salzformen, z. B. (R)Vanisperse CB und/oder (R)Ufoxane 3A der Firma Borregard, Sarpsborg, Norwegen, und als Bestandteil (d) Alkylpolyethoxyether, wobei der Alkylrest natürlicher oder synthetischer Art ist und eine Kettenlänge von $C_{12}$-$C_{26}$ hat und der Ethoxylierungsgrad 10 - 50 EO (Ethylenoxideinheiten) beträgt, enthalten. Letztgenannte Alkylpolyethoxyether können zusätzlich sulfatiert sein (vgl. (R)Soprophor-PA-Reihe Rhone-Poulenc). Besonders gut geeignet sind im vorliegenden Fall Tenside der (R)Soprophor-PA-Reihe mit 15 - 30 EO als Bestandteil (d).

Die vorgenannten Tenside können im Falle eines Ligninsulfonats (z. B. (R)Vanisperse CB, (R)Ufoxane 3A) besonders bevorzugt mit 1 - 4 Gew.-% und im Falle eines Alkylpolyethoxyetherprodukts (z. B. (R)Soprophor PA 15) mit 1 bis 4 Gew.-% eingesetzt werden.

Der Wirkstoff für die feste disperse Phase, d.h. Monolinuron, kann besonders bevorzugt in einer Menge von 20 - 30 Gew.-% eingesetzt werden, der salzartig gelöste Wirkstoff (z. B. Glufosinate, Glyphosate) in einer Menge von 8 - 30 Gew.-%.

Herstellen lassen sich die erfindungsgemäßen herbiziden Mischformulierungen, indem man gemäß jeweiliger Rezeptur die Bestandteile in beliebiger Reihenfolge mischt und fein vermahlt. Vorzugsweise wird die Herstellung durchgeführt, indem man anteilig Wasser vorlegt und unter Rühren die Tenside (c) und (d) mit gegebenenfalls weiteren Hilfsstoffen und dann die Wirkstoffe (a) und (b) hinzugibt. Die zunächst erhaltene Suspension wird - wenn notwendig auch nach vorausgegangener Vorzerkleinerung - vorzugsweise Netzsch) in bekannter Weise feinstvermahlen, wobei 90 % der Festpartikel bevorzugt deutlich kleiner als 10 µm sein sollten.

In der nachfolgenden Tabelle I sind Beispiele aufgeführt, die die Zusammensetzung anwendungstechnisch einwandfreier und lagerstabiler Mischformulierungen aufweisen.

In Tabelle II sind Vergleichsbeispiele zu finden, die starkes Kristallwachstum (größer 50 µm) zeigen und/oder instabil sind; d.h. im Lagerversuch bei 50°C weniger als 3 Monate stabil sind. Bei den Vergleichsversuchen der Tabelle II wurden z. B. Farbstoffe eingesetzt, die in anderen bekannten Fällen Kristallwachstum bremsen; in weiteren Versuchen aus Tabelle II wurde wenigstens eines der als essentiell bezeichneten Tenside (c) oder (d) gegen ähnliche Tenside ausgetauscht, wobei sich zeigte, daß mit der erfindungsgemäßen Tensidkombination deutlich bessere Effekte, wie z. B. Lagerstabilität oder weniger Kristallwachstum in den Mischformulierungen, erhalten wird.

In den Beispielen beziehen sich die Mengenangaben auf Gewichtsprozente, soweit nichts anderes angegeben ist.

**Tabelle I**

| | 1 | 2 | 3 | 4 | 5 | 6 | 7 | 8 | 9 | 10 | 11 | 12 | 13 |
|---|---|---|---|---|---|---|---|---|---|---|---|---|---|
| Glufosinate | 16,6 | 16,6 | 16,6 | 16,6 | 16,6 | 16,6 | 17,1 | | | 4,75 | 16,6 | 16,6 | 2 |
| Glyphosate | | | | | | | | 9,5 | 9,5 | 9,5 | | | |
| Monolinuron | 24,9 | 24,9 | 24,9 | 24,9 | 24,9 | 25,5 | 14,3 | 14,3 | 14,3 | 14,3 | 24,9 | 24,9 | 3 |
| Silcolapse 432 | 2,5 | 2,5 | 2,5 | 2,5 | 2,5 | 2,5 | 2,5 | 2,5 | 2,5 | 2,5 | 2,5 | 2,5 | 0,5 |
| Genapol LRO | 8 | 8 | 8 | 8 | 8 | 8 | 8 | 8 | 8 | 8 | 8 | 8 | 2 |
| Darvan Nr. 3 | 0,5 | 0,5 | 0,5 | 0,5 | 0,5 | 0,5 | 0,5 | 1 | 1 | | | | 1 |
| Darvan Nr. 1 | | | | | | | | 1 | | 1 | | | |
| Bentone EW | 0,1 | | 0,1 | | 0,1 | 0,1 | 0,1 | 0,2 | 0,2 | 0,2 | 0,2 | 0,2 | 1 |
| Vanisperse CB | | 1 | 1 | 1 | 2 | 1 | 1 | 1 | 1 | 2 | 1 | | 4 |
| Soprophor PA15 | 3 | 3 | 3 | 3 | 2 | 3 | 1 | 3 | 3 | 3 | 3 | 3 | 2 |
| Ufoxane 3A | 1 | | | | | | | | | | | 1 | |
| Bentone SD1 | | 0,1 | | | | | | | | | | | |
| Glycerin 98 % | | | | | | 5 | | | 5 | | | | 8 |
| Wasser | | | | | | ad 100 % | | | | | | | |

**Erläuterungen zu Tabelle I: siehe nächste Seite**

**Erläuterungen zu Tabelle I:**

(R)Silcolapse 432 = Entschäumer auf Siliconbasis

(R)Genapol LRO = ($C_{12}$-$C_{14}$-Alkyl)diglykolethersulfat Na-Salz

(R)Darvan Nr. 3 = Natriumsalz von polymerisierten substituierten Alkylbenzolsulfonsäuren und Zusatz von anorg. Suspendiermittel

(R)Darvan Nr. 1 = Natriumsalz von polymerisierten Alkylnaphthalinsulfonsäuren

(R)Bentone EW = Geliermittel (Verdicker) auf Basis von Magnesium-Montmorillonit

(R)Bentone SD1 = Verdicker auf Basis organisch modifizierter Schichtsilikate

(R)Vanisperse CB = Natriumligninsulfonat (Sulfonierungsgrad 0,17, d.h. Sulfonsäuregruppen je Phenylpropaneinheiten)

Soprophor PA15 = Sulfatierter ethoxylierter synthetischer Fettalkohol

Ufoxane 3A = Natriumligninsulfonat (Sulfonierungsgrad 0,4)

**Tabelle II**

| | 1 | 2 | 3 | 4 | 5 | 6 | 7 | 8 | 9 | 10 |
|---|---|---|---|---|---|---|---|---|---|---|
| Glufosinate | 16,6 | 16,6 | 16,6 | 17,1 | 17,1 | 16,6 | 16,6 | 16,6 | 16,6 | 16,6 |
| Monolinuron | 24,9 | 24,9 | 24,9 | 25,6 | 25,6 | 24,9 | 24,9 | 24,9 | 24,9 | 24,9 |
| Silcolapse 432 | 2,5 | 2,5 | 2,5 | 2,5 | 2,5 | 3 | 3 | 2 | | |
| Genapol LRO | 8 | 8 | 8 | 12 | 8 | 8 | 12 | 6 | 6 | 6 |
| Darvan Nr. 3 | 0,5 | 0,5 | | 0,5 | | 1 | | 1 | 1 | 1 |
| Darvan Nr. 1 | | 1 | | 0,5 | | | 1 | | 2 | 2 |
| Bentone EW | 0,1 | | | 0,1 | | 0,1 | 0,2 | 0,1 | 0,1 | 0,1 |
| Vanisperse CB | | | 1 | 1 | 1 | 2 | | 2 | | |
| Soprophor PA15 | 3 | 3 | | | | | | | | |
| Galoryl MT 702 | 1 | | | | | | | | | |
| Glycerin 98 % | | | 5 | | | | | | | |
| Forlanit P | | | 3 | | 3 | | | | | |
| Permanent-bordo FRR | | | | 0,1 | | 0,1 | 0,2 | | | |
| PV-Echtweiß R01 | | | | | 0,3 | | | | | |
| Soprophor PS 15 | | | | | | 2 | | | | |
| Dispergierm. Hoe S 1494 | | | | | | | | 2 | | |
| Galoryl DT 201 | | | | | | | | | 1 | |
| SE 2 | | | | | | | | | 4 | 4 |
| Galoryl CM 11 | | | | | | | | | | 1 |
| Wasser | | | | | ad 100 % | | | | | |

Erläuterungen zu Tabelle II:  siehe nächste Seite

EP 0 402 770 B1

**Erläuterung zu Tabelle II:   siehe Tabelle I und**

(R)Galoryl MT 702 = Natrium-alkylnaphthalinsulfonat
(anionisches Netzmittel)

(R)Forlanit P = Natriumlauryletherphosphat

Permanentbordo FRR = Pigment Red 12, Color Index Nr. 12385

PV-Echtweiß R01 = Pigment White 6, Color Index Nr. 77891

(R)Soprophor PS 15 = Alkylpolyethoxyetherphosphat (10-40 EO)

HOE S 1494 = Sulfoniertes Kresol-Phenol-Formaldehyd-
Kondensationsprodukt;

(R)Galoryl DT 201 = Anionisches Dispergiermittel auf Basis
von organischen
Sulfonsäurenatriumsalzen

SE 2 = Entschäumer auf Silikonbasis

(R)Galoryl CM 11 = Verdünner auf Basis von mineralischen
Produkten und nichtionischen
oberflächenaktiven Stoffen

## Patentansprüche

**Patentansprüche für folgende Vertragsstaaten : AT, BE, CH, DE, DK, FR, GB, GR, IT, LI, NL, SE**

1. Herbizide Zubereitung mit einem Gehalt an
   a) 1-50 Gew.-% Monolinuron = N-(4-Chlorphenyl)-N'-methoxy-N'-methylharnstoff.
   b) 1-60 Gew.-% mindestens eines salzartig gelösten Wirkstoffs aus der Gruppe enthaltend Salze von Phenoxyessig- und Phenoxypropionsäuren, Glufosinate, Glyphosate, Dimethylphosphinoylhydroxyessigsäure, 3-Isopropyl-(1H)benzo-2,1,3-benzo-thiazin-4-on-2,2-dioxid und 1,1'-Dimethyl-4,4'-bipyridiniumchlorid,
   c) 0,1-20 Gew.-% eines Ligninsulfonats,
   d) 0,1-18 Gew.-% eines gegebenenfalls sulfatierten Alkylpolyethoxyethers mit 12 bis 26 C-Atomen im Alkylrest und einem Ethoxylierungsgrad von 10 bis 50 EO (Ethylenoxy-Einheiten),
   e) 0-25 Gew.-% üblicher Hilfsmittel aus der Gruppe enthaltend Netzmittel, Entschäumer, Verdicker, Konservierungsmittel, Frostschutzmittel und das Eintrocknen verhindernde Zusätze und
   f) 20-80 Gew.-% Wasser.

2. Zubereitung nach Anspruch 1, dadurch gekennzeichnet, daß sie
   a) 10-40 Gew.-% Monolinuron,
   b) 8-40 Gew.-% mindestens eines salzartig gelösten Wirkstoffs aus der Gruppe enthaltend Salze von Phenoxyessig- und Phenoxypropionsäuren, Glufosinate, Glyphosate, Dimethylphosphinoylhydroxyessigsäure, 3-Isopropyl-(1H)benzo-2,1,3-benzo-thiazin-4-on-2,2-dioxid und 1,1-Dimethyl-4,4'-bipyridiniumchlorid,
   c) 1-6 Gew.-% eines Ligninsulfonats,
   d) 0,2-5 Gew.-% eines gegebenenfalls sulfatierten Alkylpolyethoxyethers mit 12 bis 26 C-Atomen im Alkylrest und einem Ethoxylierungsgrad von 10 bis 50 EO (Ethylenoxy-Einheiten),
   e) 0 bis 15 Gew.-% üblicher Hilfsmittel aus der Gruppe enthaltend Netzmittel, Entschäumer, Verdicker, Konservierungsmittel, Frostschutzmittel und das Eintrocknen verhindernde Zusätze und
   f) 20-80 Gew.-% Wasser

enthält.

3. Zubereitung nach Anspruch 1 oder 2, dadurch gekennzeichnet, daß sie als Bestandteil (b) Glufosinate oder Glyphosate oder ein Gemisch davon in salzartig gelöster Form enthält.

4. Zubereitung nach einem oder mehreren der Ansprüche 1 bis 3, dadurch gekennzeichnt, das sie
a) 20 bis 30 Gew.-% Monolinuron,
b) 8 bis 30 Gew.-% Glufosinate, Glyphosate oder ein Gemisch davon in Form des jeweiligen Alkalimetall-, Erdalkalimetall-, Ammonium- oder mono- bis trisubstituierten Ammoniumsalzes,
c) 1 bis 4 Gew.-% eines Natriumligninsulfonats,
d) 1 bis 4 Gew.-% eines gegebenenfalls sulfatierten ($C_{12}$-$C_{26}$-Alkyl)-polyethoxyethers mit 10 bis 50 EO,
e) 0 bis 15 Gew.-% üblicher Hilfsmittel und
f) 30 bis 65 Gew.-% Wasser
enthält.

5. Zubereitung nach einem oder mehreren der Ansprüche 1 bis 4, dadurch gekennzeichnet, daß 90 % der Festpartikel kleiner als 10 μm sind.

6. Verfahren zur Herstellung der nach einem oder mehreren der Ansprüche 1 bis 5 definierten Zubereitung, dadurch gekennzeichnet, daß man die Bestandteile (c), (d), (e) und (f) unter Rühren mischt, danach die Bestandteile (a) und (b) zufügt und anschließend mit üblichen Reibekugelmühlen fein vermahlt.

7. Verwendung der nach einem oder mehreren der Ansprüche 1 bis 5 definierten Zubereitung zum Bekämpfen von unerwünschtem Pflanzenwuchs.

**Patentansprüche für folgenden Vertragsstaat : ES**

1. Verfahren zur Herstellung einer herbiziden Zubereitung, dadurch gekennzeichnet, daß man
a) 1-50 Gew.-% Monolinuron = N-(4-Chlorphenyl)-N'-methoxy-N'-methylharnstoff.
b) 1-60 Gew.-% mindestens eines salzartig gelösten Wirkstoffs aus der Gruppe enthaltend Salze von Phenoxyessig- und Phenoxypropionsäuren, Glufosinate, Glyphosate, Dimethylphosphinoylhydroxyessigsäure, 3-Isopropyl-(1H)benzo-2,1,3-benzo-thiazin-4-on-2,2-dioxid und 1,1'-Dimethyl-4,4'-bipyridiniumchlorid,
c) 0,1-20 Gew.-% eines Ligninsulfonats,
d) 0,1-18 Gew.-% eines gegebenenfalls sulfatierten Alkylpolyethoxyethers mit 12 bis 26 C-Atomen im Alkylrest und einem Ethoxylierungsgrad von 10 bis 50 EO (Ethylenoxy-Einheiten),
e) 0-25 Gew.-% üblicher Hilfsmittel aus der Gruppe enthaltend Netzmittel, Entschäumer, Verdicker, Konservierungsmittel, Frostschutzmittel und das Eintrocknen verhindernde Zusätze und
f) 20-80 Gew.-% Wasser
in beliebiger Reihenfolge mischt und fein vermahlt.

2. Verfahren nach Anspruch 1, dadurch gekennzeichnet, daß
a) 10-40 Gew.-% Monolinuron,
b) 8-40 Gew.-% mindestens eines salzartig gelösten Wirkstoffs aus der Gruppe enthaltend Salze von Phenoxyessig- und Phenoxypropionsäuren, Glufosinate, Glyphosate, Dimethylphosphinoylhydroxyessigsäure, 3-Isopropyl-(1H)benzo-2,1,3-benzo-thiazin-4-on-2,2-dioxid und 1,1-Dimethyl-4,4'-bipyridiniumchlorid,
c) 1-6 Gew.-% eines Ligninsulfonats,
d) 0,2-5 Gew.-% eines gegebenenfalls sulfatierten Alkylpolyethoxyethers mit 12 bis 26 C-Atomen im Alkylrest und einem Ethoxylierungsgrad von 10 bis 50 EO (Ethylenoxy-Einheiten),
e) 0 bis 15 Gew.-% üblicher Hilfsmittel aus der Gruppe enthaltend Netzmittel, Entschäumer, Verdicker, Konservierungsmittel, Frostschutzmittel und das Eintrocknen verhindernde Zusätze und
f) 20-80 Gew.-% Wasser
gemischt und vermahlen werden.

3. Verfahren nach Anspruch 1 oder 2, dadurch gekennzeichnet, daß als Bestandteil (b) Glufosinate oder Glyphosate oder ein Gemisch davon in salzartig gelöster Form verwendet wird.

4. Verfahren nach einem oder mehreren der Ansprüche 1 bis 3, dadurch gekennzeichnt, das

a) 20 bis 30 Gew.-% Monolinuron,

b) 8 bis 30 Gew.-% Glufosinate, Glyphosate oder ein Gemisch davon in Form des jeweiligen Alkalimetall-, Erdalkalimetall-, Ammonium- oder mono- bis trisubstituierten Ammoniumsalzes,

c) 1 bis 4 Gew.-% eines Natriumligninsulfonats,

d) 1 bis 4 Gew.-% eines gegebenenfalls sulfatierten ($C_{12}$-$C_{26}$-Alkyl)-polyethoxyethers mit 10 bis 50 EO,

e) 0 bis 15 Gew.-% üblicher Hilfsmittel und

f) 30 bis 65 Gew.-% Wasser

verwendet werden.

5. Verfahren nach einem oder mehreren der Ansprüche 1 bis 4, dadurch gekennzeichnet, daß 90 % der Festpartikel in der fertigen Zubereitung kleiner als 10 $\mu$m sind.

6. Verfahren nach einem oder mehreren der Ansprüche 1 bis 5, dadurch gekennzeichnet, daß man die Bestandteile (c), (d), (e) und (f) unter Rühren mischt, danach die Bestandteile (a) und (b) zufügt und anschließend mit üblichen Reibekugelmühlen fein vermahlt.

7. Verwendung der nach einem Verfahren nach oder mehreren der Ansprüche 1 bis 6 erhaltenen Zubereitung zum Bekämpfen von unerwünschtem Pflanzenwuchs.

## Claims

### Claims for the following Contracting States : AT, BE, CH, DE, DK, FR, GB, GR, IT, LI NL, SE

1. A herbicidal preparation which comprises

a) 1-50 % by weight of monolinuron = N-(4-chlorophenyl)-N'-methoxy-N'-methylurea,

b) 1-60 % by weight of at least one active substance, dissolved in the manner of a salt, from the series comprising salts of phenoxyacetic acids, phenoxypropionic acids, glufosinate, glyphosate, dimethylphosphinoylhydroxyacetic acid, 3-isopropyl-(1H)-phosphinoylhydroxyacetic acid, 3-isopropyl-(1H)-benzo-2,1,3-benzo-thiazin-4-one 2,2-dioxide and 1,1'-dimethyl-4,4'-bipyridinium chloride,

c) 0.1-20 % by weight of a ligninsulfonate,

d) 0.1-18 % by weight of an optionally sulfated alkyl polyethoxy ether which has 12 to 26 carbon atoms in the alkyl radical and a degree of ethoxylation of 10 to 50 EO (ethyleneoxy units),

e) 0-25 % by weight of customary auxiliaries from the group comprising wetting agents, antifoams, thickeners, preservatives, antifreeze agents and humectants, and

f) 20-80 % by weight of water

2. A preparation as claimed in claim 1, which comprises

a) 10-40 % by weight of monolinuron,

b) 8-40% by weight of at least one active substance, dissolved in the manner of a salt, from the series comprising salts of phenoxyacetic acids, phenoxypropionic acids, glufosinate, glyphosate, dimethylphosphinoylhydroxyacetic acid, 3-isopropyl-(1H)benzo-2,1,3-benzo-thiazin-4-one 2,2-dioxide and 1,1'-dimethyl-4,4'-bipyridinium chloride,

c) 1-6 % by weight of a ligninsulfonate,

d) 0.2-5 % by weight of an optionally sulfated alkyl polyethoxy ether which has 12 to 26 carbon atoms in the alkyl radical and a degree of ethoxylation of 10 to 50 EO (ethyleneoxy units),

e) 0 to 15 % by weight of customary auxiliaries from the group comprising wetting agents, antifoams, thickeners, preservatives, antifreeze agents and humectants, and

f) 20-80 % by weight of water.

3. A preparation as claimed in claim 1 or 2, which comprises, as component (b), glufosinate or glyphosate or a mixture thereof, dissolved in the manner of a salt.

4. A preparation as claimed in one or more of claims 1 to 3, which comprises

a) 20 to 30 % by weight of monolinuron,

b) 8 to 30 % by weight of glufosinate, glyphosate or a mixture thereof in the form of the particular alkali metal salt, alkaline earth metal salt, ammonium salt or mono- to trisubstituted ammonium salt,

c) 1 to 4 % by weight of a sodium ligninsulfonate,

d) 1 to 4 % by weight of an optionally sulfated $C_{12}$-$C_{26}$-alkyl polyethoxy ether having 10 to 50 EO,

e) 0 to 15 % by weight of customary auxiliaries and
f) 30 to 65 % by weight of water.

5. A preparation as claimed in one or more of claims 1 to 4, wherein 90 % of the solid particles are smaller than 10 μm.

6. A process for manufacturing a preparation as defined in one or more of claims 1 to 5, which comprises mixing components (c), (d), (e) and (f) with stirring, subsequently adding components (a) and (b) and then grinding the mixture finely using conventional ball mills.

7. The use of the preparation as defined in one or more of claims 1 to 5 for controlling undesired vegetation.

**Claims for the following Contracting State : ES**

1. A process for manufacturing a herbicidal preparation, which comprises mixing
   a) 1-50 % by weight of monolinuron = N-(4-chlorophenyl)-N'-methoxy-N'-methylurea,
   b) 1-60 % by weight of at least one active substance, dissolved in the manner of a salt, from the series comprising salts of phenoxyacetic acids, phenoxypropionic acids, glufosinate, glyphosate, dimethylphosphinoylhydroxyacetic acid, 3-isopropyl-(1H)benzo-2,1,3-benzo-thiazin-4-one 2,2-dioxide and 1,1'-dimethyl-4,4'-bipyridinium chloride,
   c) 0.1-20 % by weight of a ligninsulfonate,
   d) 0.1-18 % by weight of an optionally sulfated alkyl polyethoxy ether which has 12 to 26 carbon atoms in the alkyl radical and a degree of ethoxylation of 10 to 50 EO (ethyleneoxy units),
   e) 0-25 % by weight of customary auxiliaries from the group comprising wetting agents, antifoams, thickeners, preservatives, antifreeze agents and humectants, and
   f) 20-80 % by weight of water
   in any desired sequence and grinding the mixture finely.

2. The process as claimed in claim 1, which comprises mixing
   a) 10-40 % by weight of monolinuron,
   b) 8-40% by weight of at least one active substance, dissolved in the manner of a salt, from the series comprising salts of phenoxyacetic acids, phenoxypropionic acids, glufosinate, glyphosate, dimethylphosphinoylhydroxyacetic acid, 3-isopropyl-(1H)benzo-2,1,3-benzo-thiazin-4-one 2,2-dioxide and 1,1'-dimethyl-4,4'-bipyridinium chloride,
   c) 1-6 % by weight of a ligninsulfonate,
   d) 0.2-5 % by weight of an optionally sulfated alkyl polyethoxy ether which has 12 to 26 carbon atoms in the alkyl radical and a degree of ethoxylation of 10 to 50 EO (ethyleneoxy units),
   e) 0 to 15 % by weight of customary auxiliaries from the group comprising wetting agents, antifoams, thickeners, preservatives, antifreeze agents and humectants, and
   f) 20-80 % by weight of water
   and grinding the mixture.

3. The process as claimed in claim 1 or 2, wherein, as component (b), glufosinate or glyphosate or a mixture thereof, dissolved in the manner of a salt, is used.

4. The process as claimed in one or more of claims 1 to 3, wherein
   a) 20 to 30 % by weight of monolinuron,
   b) 8 to 30 % by weight of glufosinate, glyphosate or a mixture thereof in the form of the particular alkali metal salt, alkaline earth metal salt, ammonium salt or mono- to trisubstituted ammonium salt,
   c) 1 to 4 % by weight of a sodium ligninsulfonate,
   d) 1 to 4 % by weight of an optionally sulfated $C_{12}$-$C_{26}$-alkyl polyethoxy ether having 10 to 50 EO,
   e) 0 to 15 % by weight of customary auxiliaries, and
   f) 30 to 65 % by weight of water
   are used.

5. The process as claimed in one or more of claims 1 to 4, wherein 90 % of the solid particles in the finished preparation are smaller than 10 μm.

6. The process as claimed in one or more of claims 1 to 5, which comprises mixing components (c), (d), (e) and (f) with stirring, subsequently adding components (a) and (b) and then grinding the mixture finely using conventional ball mills.

7. The use of the preparation obtained by the process as claimed in one or more of claims 1 to 6 for controlling undesired vegetation.

**Revendications**

**Revendications pour les Etats contractants suivants : AT, BE, CH, DE, DK, FR, GB, GR, IT, LI, NL, SE**

1. Préparation herbicide, contenant
   a) de 1 à 50 % en poids de monolinuron (N-chloro-4-phényl)-N'-méthoxy-N'-Méthyl-urée),
   b) de 1 à 60 % en poids d'au moins une matière active soluble de type sel choisie parmi l'ensemble comprenant les sels des acides phénoxyacétique et phénoxypropionique, le glufosinate, le glyphosate, l'acide diméthylphosphinoylhydroxyacétique, l'isopropyl-3-1H)benzo-benzothiazin-2,1-3-one-4dioxyde-2,2 et du chlorure de diméthyl-1,1'-bipyridinium-4,4',
   c) de 0,1 à 20 % en poids d'un ligninsulfonate,
   d) de 0,1 à 18 % en poids d'un alkylpolyéthoxyéther éventuellement sulfaté ayant de 12 à 26 atomes de carbone dans le fragment alkyle et un degré d'éthoxylation de 10 à 50 OE (motifs oxyde d'éthylène),
   e) de 0 à 25 % en poids d'adjuvants usuels choisis parmi l'ensemble comprenant les agents mouillants, les anti-moussants, les épaississants, les conservateurs, les antigels et les additifs empêchant le séchage, et
   f) de 20 à 80 % en poids d'eau.

2. Préparation selon la revendication 1, caractérisée en ce qu'elle contient
   a) de 10 à 40 % en poids de monolinuron
   b) de 8 à 40 % en poids d'au moins une matière active soluble de type sel choisie parmi l'ensemble comprenant les sels des acides phénoxyacétique et phénoxypropionique, le glufosinate, le glyphosate, l'acide diméthylphosphinoylhydroxyacétique, l'isopropyl-3-1H)benzo-benzothiazin-2,1-3-one-4dioxyde-2,2 et du chlorure de diméthyl-1,1'-bipyridinium-4,4',
   c) de 1 à 6 % en poids d'un ligninsulfonate,
   d) de 0,2 à 5 % en poids d'un alkylpolyéthoxyéther éventuellement sulfaté ayant de 12 à 26 atomes de carbone dans le fragment alkyle et un degré d'éthoxylation de 10 à 50 OE (motifs oxyde d'éthylène),
   e) de 0 à 15 % en poids d'adjuvants usuels choisis parmi l'ensemble comprenant les agents mouillants, les anti-moussants, les épaississants, les conservateurs, les antigels et les additifs empêchant le séchage, et
   f) de 20 à 80 % en poids d'eau.

3. Préparation selon la revendication 1 ou 2, caractérisée en ce qu'elle contient comme constituant (b) du glufosinate ou du glyphosate ou un mélange de ces derniers sous forme de sels dissous.

4. Préparation selon l'une ou plusieurs des revendications 1 à 3, caractérisée en ce qu'elle contient
   a) 20 à 30 % en poids de monolinuron,
   b) de 8 à 30 % en poids de glufosinate, de glyphosate ou d'un de leurs mélanges, sous forme de leurs sels de métaux alcalins, de métaux alcalino-terreux, d'ammonium ou d'amonium mono- à trisubstitué,
   c) de 1 à 4 % en poids d'un ligninsulfonate de sodium,
   d) de 1 à 4 % en poids d'un (alkyl en $C_{12}$-$C_{26}$)polyéthoxyéther sulfaté à 10-50 OE,
   e) de 0 à 15 % en poids d'adjuvants usuels, et
   f) de 30 à 65 % en poids d'eau.

5. Préparation selon l'une ou plusieurs des revendications 1 à 4, caractérisée en ce que 90 % des particules solides ont une granulométrie inférieure à 10 μm.

6. Procédé pour fabriquer la préparation selon l'une ou plusieurs des revendications 1 à 5, caractérisé en ce qu'on mélange sous agitation les constituants (c), (d), (e) et (f), et qu'on ajoute les constituants (a) et (b) et finalement on broie jusqu'à une fine granulométrie à l'aide de broyeurs à billes usuels.

**7.** Utilisation de la préparation selon l'une ou plusieurs des revendications 1 à 5, pour maitriser la croissance indésirable des végétaux.

**Revendications pour l'Etat contractant suivant : ES**

**1.** Procédé pour fabriquer une préparation herbicide, caractérisé en ce qu'on mélange dans un ordre quelconque, puis que l'on broie jusqu'à une fine granulométrie
a) de 1 à 50 % en poids de monolinuron (N-chloro-4-phényl)-N'-méthoxy-N'-Méthyl-urée),
b) de 1 à 60 % en poids d'au moins une matière active soluble de type sel choisie parmi l'ensemble comprenant les sels des acides phénoxyacétique et phénoxypropionique, le glufosinate, le glyphosate, l'acide diméthylphosphinoylhydroxyacétique, l'isopropyl-3-1H)benzo-benzothiazin-2,1-3-one-4dioxyde-2,2 et du chlorure de diméthyl-1,1-bipyridinium-4,4',
c) de 0,1 à 20 % en poids d'un ligninsulfonate,
d) de 0,1 à 18 % en poids d'un alkylpolyéthoxyéther éventuellement sulfaté ayant de 12 à 26 atomes de carbone dans le fragment alkyle et un degré d'éthoxylation de 10 à 50 OE (motifs oxyde d'éthylène),
e) de 0 à 25 % en poids d'adjuvants usuels choisis parmi l'ensemble comprenant les agents mouillants, les anti-moussants, les épaississants, les conservateurs, les antigels et les additifs empêchant le séchage, et
f) de 20 à 80 % en poids d'eau.

**2.** Procédé selon la revendication 1, caractérisé en ce qu'on mélange et broie
a) de 10 à 40 % en poids de monolinuron
b) de 8 à 40 % en poids d'au moins une matière active soluble de type sel choisie parmi l'ensemble comprenant les sels des acides phénoxyacétique et phénoxypropionique, le glufosinate, le glyphosate, l'acide diméthylphosphinoylhydroxyacétique, l'isopropyl-3-1H)benzo-benzothiazin-2,1-3-one-4dioxyde-2,2 et du chlorure de diméthyl-1,1'-bipyridinium-4,4',
c) de 1 à 6 % en poids d'un ligninsulfonate,
d) de 0,2 à 5 % en poids d'un alkylpolyéthoxyéther éventuellement sulfaté ayant de 12 à 26 atomes de carbone dans le fragment alkyle et un degré d'éthoxylation de 10 à 50 OE (motifs oxyde d'éthylène),
e) de 0 à 15 % en poids d'adjuvants usuels choisis parmi l'ensemble comprenant les agents mouillants, les anti-moussants, les épaississants, les conservateurs, les antigels et les additifs empêchant le séchage, et
f) de 20 à 80 % en poids d'eau.

**3.** Procédé selon la revendication 1 ou 2, caractérisé en ce qu'on utilise comme constituant (b) du glufosinate ou du glyphosate ou un de leurs mélanges sous forme de sels dissous.

**4.** Procédé selon l'une ou plusieurs des revendications 1 à 3, caractérisé en ce qu'on utilise
a) 20 à 30 % en poids de monolinuron,
b) de 8 à 30 % en poids de glufosinate, de glyphosate ou d'un de leurs mélanges, sous forme de leurs sels de métaux alcalins, de métaux alcalino-terreux, d'ammonium ou d'amonium mono- à trisubstitué,
c) de 1 à 4 % en poids d'un ligninsulfonate de sodium,
d) de 1 à 4 % en poids d'un (alkyl en $C_{12}$-$C_{26}$)polyéthoxyéther sulfaté à 10-50 OE,
e) de 0 à 15 % en poids d'adjuvants usuels, et
f) de 30 à 65 % en poids d'eau.

**5.** Procédé selon l'une ou plusieurs des revendications 1 à 4, caractérisé en ce que 90 % des particules solides de la préparation finie ont une granulométrie inférieure à 10 µm.

**6.** Procédé selon l'une ou plusieurs des revendications 1 à 5, caractérisé en ce qu'on mélange sous agitation les constituants (c), (d), (e) et (f), et qu'on ajoute les constituants (a) et (b) et finalement on broie jusqu'à une fine granulométrie à l'aide de broyeurs à billes usuels.

**7.** Utilisation de la préparation obtenue par le procédé selon l'une ou plusieurs des revendications 1 à 6, pour maitriser la croissance indésirable des végétaux.